(19) Europäisches Patentamt
European Patent Office
Office européen des brevets

(11) **EP 1 939 087 B1**

(12) **FASCICULE DE BREVET EUROPEEN**

(45) Date de publication et mention de la délivrance du brevet:
**01.07.2009 Bulletin 2009/27**

(51) Int Cl.:
***B64C 27/51*** *(2006.01)*

(21) Numéro de dépôt: **07023730.0**

(22) Date de dépôt: **07.12.2007**

(54) **Amélioration aux rotors de giravions équipés d'amortisseurs interpales**

Verbesserung an den Rotoren von Drehflügelflugzeugen, die mit Drehschwingungsdämpfern zwischen den Flügelblättern ausgestattet sind

Rotorcraft rotor improvement equipped with inter-blade shock absorbers

(84) Etats contractants désignés:
**GB IT**

(30) Priorité: **28.12.2006 FR 0611488**

(43) Date de publication de la demande:
**02.07.2008 Bulletin 2008/27**

(73) Titulaire: **EUROCOPTER**
**13725 Marignane Cédex (FR)**

(72) Inventeur: **Beroul, Frédéric**
**Couteron**
**13100 Aix En Provence (FR)**

(74) Mandataire: **Pouillot, Laurent Pierre Paul**
**GPI & Associés**
**EuroParc de Pichaury - Bât D1**
**1330, rue Guillibert de la Lauzière**
**13856 Aix en Provence Cedex 3 (FR)**

(56) Documents cités:
**FR-A- 948 640          FR-A1- 2 630 703**
**FR-A1- 2 750 948**

## Description

La présente invention est relative à une amélioration aux rotors de giravions équipés d'amortisseurs interpales.

Le domaine technique de l'invention est celui de la fabrication notamment d'hélicoptères.

L'invention concerne les rotors de giravions comportant un moyeu entraîné en rotation selon un axe de rotation par un arbre de sortie d'une boite de transmission de puissance ou arbre d'entraînement, ainsi qu'au moins trois pales fixées au moyeu par l'intermédiaire d'articulations appropriées, en particulier par l'intermédiaire d'une butée sphérique lamifiée dédiée à chaque pale, et des amortisseurs interpales reliant chacun deux pales adjacentes.

En effet, il est rappelé que dans l'hypothèse de l'encastrement de chaque pale sur un moyeu, le rotor ainsi constitué est un rotor rigide. En vol stationnaire, la répartition des efforts aérodynamiques le long d'une pale engendre une répartition de moment de flexion dont la valeur est très importante au pied de la pale. En vol de translation, la pale dite « avançante » porte plus que la pale dite « reculante » du fait de l'inégalité des vitesses de l'air comme cela sera précisé par ailleurs.

Par conséquent, la résultante des forces aérodynamiques exercées sur une pale n'a donc pas la même valeur en chaque azimut, ni le même point d'application : le moment d'encastrement au pied de la pale est ainsi élevé et variable, ce qui génère des contraintes alternées entraînant un phénomène de fatigue préjudiciable des matériaux. De plus, la résultante des forces aérodynamiques de toutes les pales n'est plus portée par l'axe rotor ce qui entraîne la création d'un moment de roulis, croissant avec la vitesse qui peut rendre difficile l'équilibre des forces en vol de translation.

Afin de remédier à ces inconvénients, il est connu d'articuler les pales sur le moyeu autour d'un axe perpendiculaire à l'arbre d'entraînement et désigné axe de battement vertical auquel correspond une articulation de battement vertical capable de reprendre une force d'orientation quelconque mais ne peut, en aucun cas, reprendre un moment. Par conséquent, si une pale est articulée sur le moyeu, le moment sera nul à l'attache. Pour satisfaire l'équilibre d'une pale, les efforts centrifuges maintiennent la pale après une certaine levée de celle-ci, laissant apparaître une conicité $a_0$.

Dans ces conditions, il n'y a plus de moment de roulis important en translation d'une part et les pales ne tournent plus dans un plan, mais leurs extrémités extérieures décrivent un cône très ouvert. En pratique, l'axe de battement ne se trouve plus, alors, sur l'axe de rotation mais est décalé d'une distance $a_1$ appelée excentricité.

Il convient encore de rappeler qu'il faut, pour assurer la sustentation d'un hélicoptère lors de ses différentes configurations, pouvoir contrôler la sustentation du rotor et la faire varier. C'est ainsi qu'est introduite l'articulation de pas, dont l'axe est sensiblement parallèle à l'envergure de la pale correspondante, Ce nouveau degré de liberté permet de contrôler la portance de la pale par action sur la commande de pas général et aussi de faire varier le pas cycliquement, permettant ainsi le contrôle du plan de rotation des pales qui décrivent alors un cône dont l'axe virtuel ne coïncide plus avec l'axe d'entraînement : la résultante des forces appliquées au moyeu change de direction en même temps que le plan du rotor. De ce fait, il en résulte des moments autour du centre de gravité de l'hélicoptère, ce qui permet son pilotage.

Comme indiqué précédemment, le plan de rotation des pales peut être différent du plan perpendiculaire à l'arbre d'entraînement. Dans ces conditions, il est nécessaire d'articuler chaque pale en traînée car l'extrémité de chaque pale est à une distance variable de l'arbre rotor, comme expliqué plus précisément par la suite à propos des forces de Coriolis. Sinon, il apparaîtrait nécessairement des forces d'inertie, génératrices de moments de flexion alternée de chaque pale dans son plan. Une telle articulation de traînée se fait en articulant une pale autour d'un axe de traînée sensiblement parallèle à l'axe rotor, et par suite sensiblement perpendiculaire aux efforts de traînée. Pour qu'une telle pale puisse être entraînée à partir de l'arbre d'entraînement, il faut bien sûr que l'articulation de traînée soit suffisamment éloignée de l'axe rotor pour que le moment dû aux forces centrifuges équilibre le moment dû aux forces de traînée et d'inertie, ce qui exige un déport de l'axe de traînée ou excentrement e, et ceci sans que l'angle $\delta$ dit de « traînée », soit trop important.

Par conséquent, les pales d'un rotor articulé d'aéronef à voilure tournante, notamment un hélicoptère, peuvent être animées des quatre mouvements suivants :

I) une rotation autour de l'axe rotor,

II) une rotation autour de l'axe de battement vertical, grâce à l'articulation de battement vertical,

III) une rotation autour de l'axe de traînée, encore dit axe de battement horizontal, grâce à l'articulation de battement horizontal, ou articulation de traînée.

IV) une rotation autour de l'axe de la pale grâce à une articulation de pas (non spécifique des rotors articulés).

Comme prévu par le brevet FR2497173, par exemple, les trois rotations II-III et IV ci-dessus peuvent être réalisées par un seul organe tel qu'une butée sphérique lamifiée, à l'instar de la réalisation pour les hélicoptères SUPER PUMA MKII ou NH90 de la demanderesse où un tel organe assure la mobilité de la pale en battement, en traînée et en pas.

Toutefois, les oscillations de chaque pale autour de son axe de traînée peuvent se coupler de façon instable avec les mouvements ou les modes de déformations élastique de la cellule, en particulier les oscillations de l'hélicoptère posé au sol sur ses atterrisseurs : c'est l'origine du phénomène, désigné « résonance au sol », qui peut être dangereux pour l'appareil lorsque la fréquence propre des oscillations des pales autour de leur axe de traînée est voisine de l'une des fréquences propres des oscillations de l'appareil autour de ses atterrisseurs.

Les remèdes à ce phénomène consistent à introduire sur les axes de traînée un amortissement par un dispositif du type amortisseur visqueux ou sec, notamment, ou encore une rigidité à l'aide de câbles de tierçage associés ou non à des amortisseurs comme sur l'hélicoptère ALOUETTE de la demanderesse.

Une fonction analogue à celle des câbles de tierçage est assurée par des liaisons élastiques interpales. En pratique, il s'agit de disposer un amortisseur entre deux pales adjacentes, les fixations d'un tel amortisseur à chacune de deux pales adjacentes étant à égale distance du centre rotor, c'est-à-dire à un rayon identique par rapport à ce centre rotor.

Ces amortisseurs comprennent des moyens de rappel élastique à raideur et amortissement déterminés, pour combattre les phénomènes de résonance, en particulier de résonance sol et aussi de résonance de chaîne cinématique qui peuvent apparaître notamment sur les hélicoptères.

En effet, lors d'une excitation des pales d'un rotor en traînée, les pales sont écartées de leur position d'équilibre et peuvent se répartir inégalement en direction circonférentielle, et créer un balourd par déplacement du centre de gravité du rotor hors de l'axe de rotation de ce dernier. De plus, les pales écartées de leur position d'équilibre oscillent autour de cette position à une fréquence $\omega_\delta$, qui est la fréquence propre des pales en traînée, appelée également premier mode de traînée ou mode propre de traînée.

Si $\Omega$ est la fréquence de rotation du rotor, il est connu que le fuselage de l'hélicoptère est ainsi excité aux fréquences $|\Omega \pm \omega_\delta|$.

Posé sur le sol par son train d'atterrissage, le fuselage de l'hélicoptère constitue un système à masse suspendue au dessus du sol par un ressort et un amortisseur au niveau de chaque atterrisseur. Le fuselage reposant sur son train d'atterrissage a donc des modes propres de vibration en roulis et en tangage. Il y a risque d'instabilité au sol lorsque la fréquence d'excitation du fuselage sur son train d'atterrissage est voisine de la fréquence propre d'oscillation $|\Omega + \omega_\delta|$ ou $|\Omega - \omega_\delta|$ ce qui correspond au phénomène dénommé résonance sol. Pour éviter l'instabilité, il est connu de rechercher d'abord à éviter le croisement de ces fréquences, et, si ce croisement ne peut être évité, il faut amortir suffisamment le fuselage sur son train d'atterrissage ainsi que les pales du rotor principal dans leur mouvement de traînée.

En conséquence, la raideur des amortisseurs de traînée des pales d'un rotor principal doit être choisie pour que la fréquence propre des pales en traînée soit hors d'une zone de résonance sol possible, tout en disposant simultanément d'un amortissement suffisant, car, lors du passage du régime de rotation du rotor au régime critique, lors de la montée comme lors de la descente en régime, les pales doivent être suffisamment amorties pour éviter une entrée en résonance.

Pour cette raison, les amortisseurs de traînée à moyens de rappel élastique de raideur déterminée sont également dénommés adaptateurs de fréquence,

De façon générale, la raideur de l'amortisseur introduit une raideur angulaire équivalente, s'opposant aux débattements angulaires de la pale par rapport au moyeu autour de son axe de traînée. On peut ainsi augmenter la fréquence du mode propre des pales en traînée pour éloigner sa fréquence des deux phénomènes de résonance précités.

La raideur angulaire équivalente est proportionnelle au carré du bras de levier entre l'amortisseur et l'axe de traînée de la pale, c'est-à-dire la distance séparant l'axe de traînée de l'axe passant par les centres des deux rotules d'articulation de l'amortisseur,

Par rapport à une implantation plus classique où les amortisseurs sont interposés entre chaque pale et le moyeu du rotor, l'implantation interpale d'un amortisseur permet d'augmenter les bras de levier entre les amortisseurs et les axes de traînée des pales, mais aussi de faire participer deux amortisseurs par pale pour éviter la résonance sol. La raideur de chaque amortisseur peut être limitée en conséquence, et un avantage qui en découle est un plus faible niveau d'effort statique introduit par le montage de chaque amortisseur en adaptateur interpale. Cette implantation est donc très favorable pour combattre la résonance sol.

L'invention concerne en particulier une amélioration aux rotors de giravions décrits dans les brevets FR 2 630 703 et US 4 915 585 relatifs à une tête de rotor comprenant d'une part des pales reliées au moyeu d'entraînement par des articulations appropriées en battement vertical, en traînée et en pas, notamment des butées sphériques lamifiées telles que précédemment présentées et d'autre part des tirants interpales de rappel élastique avec amortissement incorporé, conformes à la description qui vient d'en être faite.

Ces documents décrivent un rotor dont chaque pale est fixée au moyeu par un manchon dont les extrémités sont en forme de chape comportant deux branches espacées et en regard mutuel. Chaque amortisseur interpale est fixé à deux pales adjacentes par deux rotules respectives. Chaque manchon est fixé au moyeu du rotor par une butée sphérique lamifiée et reçoit deux rotules de fixation respective de deux amortisseurs. Ces rotules sont centrées sur l'axe de pas de la pale ou situées à proximité immédiate de cet axe, et sont par ailleurs fixées entre les deux branches du manchon, à l'extérieur du centre d'articulation en pas, battement, et traînée de la pale par rapport au moyeu, correspondant à une butée sphérique lamifiée.

Selon ces brevets, il est ainsi proposé de décaler radialement, le long de l'axe de pas, les deux rotules fixées à un manchon, et le cas échéant de les décaler latéralement de part et d'autre de cet axe, ces écartements devant être aussi faibles que possible, Les deux rotules sont centrées sensiblement dans le plan de rotation du rotor.

Une telle disposition des points de fixation des amortisseurs de traînée aux manchons fixant les pales au moyeu, avait pour ambition de découpler complètement des mouvements angulaires de traînée déphasée, des mouvements angulaires de pas et de battement.

C'est également cet objectif que poursuit la présente invention.

Il s'est en effet avéré que la disposition des deux rotules de fixation d'amortisseur de traînée au plus près l'une de l'autre - et sur l'axe de changement de pas de la pale - conduit en pratique à des structures complexes produisant des résultats décevants en matière de découplage entre les oscillations en pas, en traînée, et en battement.

C'est l'un des objectifs de l'invention de remédier, en partie au moins, aux lacunes et inconvénients des têtes connues de rotor de giravion à amortisseurs de traînée reliant deux pales successives.

Ainsi, l'invention s'applique à un rotor de giravion comportant un moyeu entraîné en rotation selon un axe de rotation, au moins trois pales fixées au moyeu chacune par l'intermédiaire d'articulations en battement, en traînée et en pas, notamment constituées par une butée sphérique lamifiée, chaque pale présentant un axe de variation de pas, un bord d'attaque et un bord de fuite, le rotor comportant en outre des amortisseurs de traînée interpales reliés chacun à deux pales adjacentes respectivement par l'intermédiaire au moins de deux articulations sphériques (ou rotules). Dans le cas de l'utilisation d'une butée sphérique lamifiée, les axes de battement vertical, de traînée et de pas sont par définition concourants au centre de ladite butée.

Conformément à l'invention pour chaque pale, les deux articulations reliant respectivement la pale considérée à deux amortisseurs interpales (« adjacents ») sont disposées de part et d'autre de l'axe de variation de pas de la pale, l'une au moins de ces deux articulations étant décalée au dessus du plan P contenant les axes de variation de pas et de battement vertical de ladite pale, c'est-à-dire selon le sens positif d'un axe orthogonal au plan P, cet axe étant orienté positivement vers le dessus du giravion.

Selon des caractéristiques préférées de l'invention :

- de préférence, les deux articulations reliant la pale à deux amortisseurs de traînée interpales sont en outre décalées selon un axe orthogonal au plan P,

- celle des deux articulations reliant la pale à deux amortisseurs de traînée interpales, qui est disposée du côté du bord d'attaque de la pale est plus basse, par rapport à l'orientation positive de l'axe orthogonal au plan P que l'articulation disposée du côté du bord de fuite de la pale,

- l'angle formé par le plan P et l'axe reliant les deux centres des articulations de fixation d'un amortisseur interpale à deux pales adjacentes est situé dans une plage allant d'un degré environ à sept degrés environ,

- l'angle formé par le plan P et l'axe virtuel reliant les deux centres des articulations de fixation respectives de deux amortisseurs adjacents à une pale est situé dans une plage allant de sept degrés environ à vingt deux degrés environ,

- l'axe virtuel, reliant les deux centres des articulations de fixation respectives de deux amortisseurs de trainée interpales et adjacents à une pale, est décalé en élévation par rapport à l'axe de variation de pas de la pale.

- les deux articulations reliant respectivement la pale considérée à deux amortisseurs de traînée interpales adjacents sont disposées sur un manchon intermédiaire comprenant du côté radial externe une ferrure de retenue de la pale et du côté radial interne une chape équipée des articulations de l'ensemble pale et manchon au moyeu.

De la sorte, l'invention permet de réduire notablement le niveau des oscillations interpales à la fréquence de rotation du rotor, ce qui permet d'augmenter la durée de vie de l'amortisseur interpale et ses performances d'amortissement.

D'autres caractéristiques et avantages de l'invention apparaissent dans la description suivante, qui se réfère aux dessins annexés et qui illustre, sans aucun caractère limitatif, des modes préférés de réalisation de l'invention.

La figure 1 est une vue schématique en perspective d'une tête d'un rotor d'hélicoptère selon l'invention.

La figure 2 est une vue schématique en coupe transversale d'un manchon reliant une pale à un moyeu de rotor de sustentation d'un hélicoptère, et une vue selon II - II de la figure 1 montrant l'articulation d'un premier amortisseur de traînée interpale du côté du bord d'attaque d'une pale, plus basse que l'articulation d'un deuxième amortisseur de traînée interpale du côté du bord de fuite de la même pale.

La figure 3 représente une variante de réalisation par rapport à la réalisation selon la figure 2 où les articulations de deux amortisseurs interpales adjacents sont décalées au dessus du plan contenant les axes de variation de pas et de battement vertical.

La figure 4 montre les évolutions de la vitesse relative d'une pale par rapport à l'air en fonction de son azimut.

La figure 5 illustre le mouvement de battement vertical d'une pale en fonction de son azimut.

La figure 6 montre l'influence du battement vertical d'une pale sur la vitesse tangentielle d'un élément de pale.

La figure 7 est relative à l'effet des forces de Coriolis.

La figure 8 illustre les oscillations de traînée d'une pale au cours de sa rotation.

La figure 9 est relative aux variations des élongations d'un amortisseur de traînée interpale en fonction de l'azimut d'une pale pour trois configurations dont une de base C1 et deux, C2 et C3, avec un déport identique des deux articulations de deux amortisseurs à une même pale, vers le dessus du giravion.

La figure 10 montre l'influence de la traînée, du battement et du pas pour la configuration C1 relative à la figure 9.

La figure 11 montre l'influence de la traînée, du battement et du pas pour la configuration C2 relative à la figure 9.

La figure 12 illustre les effets de la variation cyclique du pas des pales sur l'angle de battement.

Les éléments présents dans plusieurs figures distinctes sont affectés d'une seule et même référence.

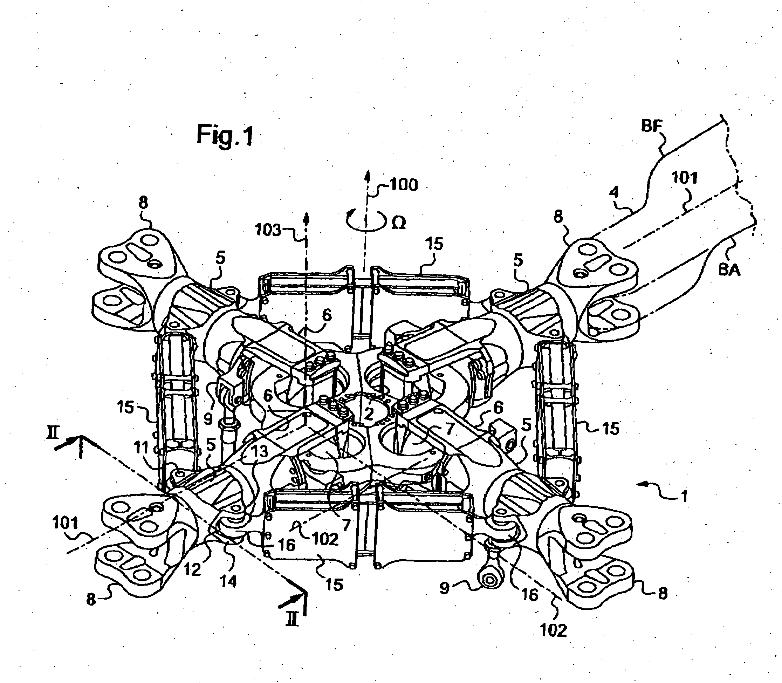

Sur la figure 1, on a représenté partiellement une tête de rotor quadripale 1 d'un giravion dont le moyeu 2 rigide est solidaire en rotation d'un mât rotor (non représenté) autour de l'axe de rotation 100, la vitesse de rotation du moyeu 2 étant désignée par Ω.

Le mât rotor, fixé sur une boîte de transmission principale (BTP) de puissance, transmet à la structure du giravion la portance du rotor et supporte les pales 4 qui transforment l'énergie mécanique des moteurs en forces aérodynamiques.

Ainsi, le moyeu 2 sert de point d'attache à chacune des pales 4 par l'intermédiaire d'un manchon 5 comprenant une chape radiale interne 6 équipée d'une articulation sphérique lamifiée 7 (ou butée sphérique) de liaison au moyeu 2 et d'une chape radiale externe 8 ou ferrure de retenue de la pale 4 correspondante.

Dans ces conditions, chaque articulation sphérique lamifiée 7 autorise l'articulation de chaque pale 4 correspondante en battement vertical autour de l'axe de battement vertical 102, en traînée ainsi qu'en variation de pas autour de l'axe de variation de pas 101 de la pale. La variation de pas se fait par action de la commande de pas 9 entraînant une rotation de la pale 4 correspondante autour de l'axe de variation de pas 101.

Bien entendu, les trois fonctions d'une butée sphérique peuvent être éventuellement réalisées par des moyens séparés tels que des axes de rotation, par exemple.

Selon l'organisation de la figure 1, la commande de pas 9 de chaque pale 4 est située du côté du bord de fuite BF de chaque pale, le bord d'attaque de chaque pale étant désigné par BA.

Toujours selon l'organisation de la figure 1, le rotor 1 comporte des tirants interpales de rappel élastique 15 ou amortisseurs de traînée interpales (ou encore adaptateurs de fréquences), chaque amortisseur de traînée interpale étant relié à deux articulations sphériques (ou rotules) 16 montées en chape à chacune des extrémités d'un amortisseur.

En particulier, ces deux articulations 16 sont de part et d'autre de l'axe de variation de pas 101 de chaque pale 4, l'une au moins de ces articulations 16 étant décalée au dessus du plan P contenant les axes de variation de pas 101 et l'axe de battement vertical 102 c'est-à-dire selon le sens positif de l'axe orthogonal 103, orthogonal au plan P, cet axe orthogonal 103 étant orienté positivement vers le dessus du giravion.

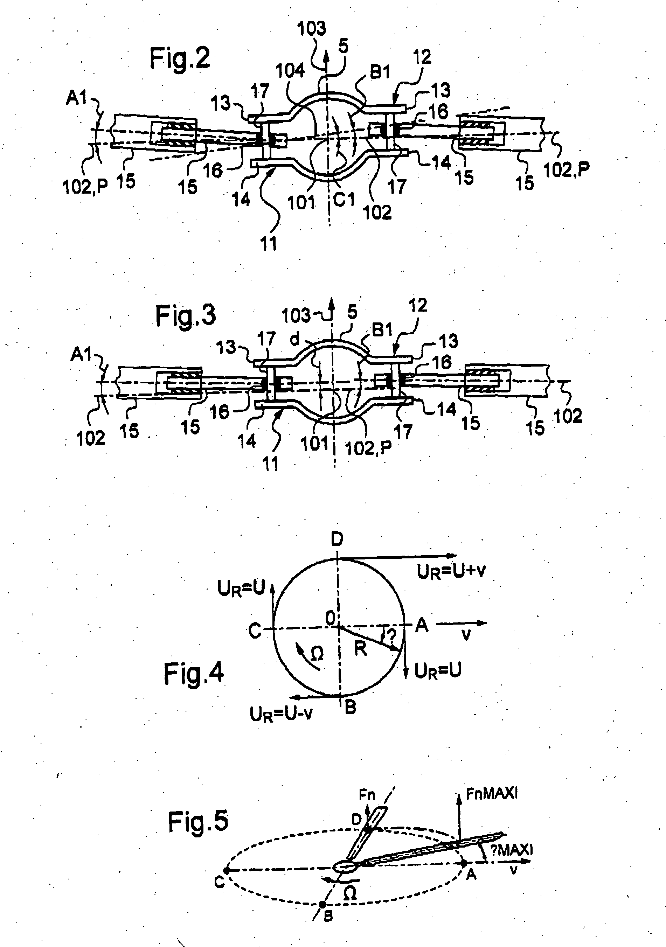

Avantageusement, ces articulations 16 peuvent être d'ailleurs disposées sur chaque manchon 15 selon les représentations des figures 2 et 3.

Toutefois, en variante, on peut concevoir de disposer les articulations 16 sur un autre support tel qu'une pale, par exemple, ou encore sur une manchette telle que décrite par les brevets EP0448685 et EP0085129, notamment.

Quoiqu'il en soit, chaque articulation 16 est reprise, par exemple, par une ferrure en forme de chape double 13, 14 disposée sur un manchon 5 (ou tout autre support), de sorte qu'un tel manchon comprend, par rapport à la pale 4 correspondante une première ferrure 11 située du côté du bord d'attaque BA de ladite pale et une seconde ferrure 12 située du côté du bord de fuite BF de la même pale.

Plus précisément, selon l'invention et de façon avantageuse, l'articulation 16 (et par suite la ferrure 11) située vers le bord d'attaque BA d'une pale 4 est plus basse, par rapport à l'orientation positive de l'axe orthogonal 103, que l'articulation 16 (et par suite la ferrure 12 associée) située vers le bord de fuite BF de ladite pale 4.

La figure 2 représente de façon schématique un manchon 5 en coupe transversale selon l'axe II-II de la figure 1.

Le manchon 5 entraînant une pale 4 est lié à gauche de la figure 2 à un premier amortisseur de traînée interpale 15 par la première ferrure 11, située du côté du bord d'attaque de la pale 4 correspondante via une articulation 16 dont l'axe central 17 est retenu par la chape double 13, 14. Le manchon 5 est également lié à droite de la figure 2 à un deuxième amortisseur 5 par des moyens semblables à ceux mis en oeuvre pour la fixation du premier amortisseur via une deuxième ferrure 12 située du côté du bord de fuite de la pale 4 considérée.

Toutefois, on remarque que la ferrure 12 est disposée au dessus du plan P formé par l'axe de variation du pas 101 et par l'axe de battement vertical 102, c'est-à-dire dans le sens positif de l'axe orthogonal 103, vers le dessus du giravion. A ce propos, on note que les axes de rotation 100 et orthogonal 103 sont parallèles quand le plan P est orthogonal à l'axe de rotation 100 du moyeu.

Par conséquent, les deux articulations 16 reliant respectivement la pale 4 considérée à deux amortisseurs de traînée interpales 15 « adjacents » sont disposées de part et d'autre de l'axe de variation du pas 101, l'articulation 16 située du côté du bord de fuite BF de la pale 4 étant décalée au dessus du plan P contenant les axes de variation de pas 101 et de battement vertical 102.

De plus, l'axe virtuel 104 reliant les deux centres des articulations de fixation respectives 16 de deux amortisseurs de trainée intercales 15 et adjacents à une pale 4 est décalé en élévation, par rapport à l'axe de variation de pas 101, à savoir positivement par rapport à l'axe de rotation 100.

Ainsi, cet axe virtuel 104 présente un décalage C1 de manière à ne jamais couper l'axe de variation de pas 101.

En particulier, l'articulation 16 relative à la ferrure 11 (côté bord d'attaque BA de la pale 4) est plus basse que l'articulation 16 relative à la ferrure 12 (côté bord de fuite BF de la pale 4).

Dans ces conditions, et comme expliqué par la suite, il s'avère que :

- l'angle A1 formé par le plan P, contenant l'axe de battement vertical 102 et l'axe de variation de pas 101, avec l'axe reliant les deux centres des articulations de fixation 16 d'un amortisseur de traînée interpale 15 à deux pales adjacentes 4 est situé dans une plage allant de un degré environ à sept degrés environ,

- l'angle B1 formé par le plan P, contenant l'axe de battement vertical 102 et l'axe de variation de pas 101, avec l'axe virtuel 104 reliant les deux centres des articulations de fixation respectives 16 de deux amortisseurs de traînée interpales 15 et adjacents à une pale 4 est situé dans une plage allant de sept degrés environ à vingt deux degrés environ.

En variante, on peut envisager que deux articulations 16 reliant la pale 4 à deux amortisseurs de traînée interpales adjacents 15 peuvent également être décalées selon un axe parallèle à l'axe orthogonal 103. Tel est le cas représenté sur la figure 3 où les deux articulations 16 se trouvent au dessus du plan formé par l'axe de variation de pas 101 et l'axe de battement vertical 102. Il en résulte également un décalage des ferrures 11 et 12 vers le sens positif de l'axe orthogonal 103.

Il importe de noter que les articulations 16 peuvent être installées sur tout type de manchon ou sur tout support adéquat (manchette, ....).

La mise au point de l'invention résulte de recherches théoriques et d'expérimentations en relation avec des considérations tenant du fonctionnement aérodynamique d'un rotor de giravion, de la mécanique du rotor et de la technologie d'ensemble de l'appareil. Nous abordons ci-après ces questions de la façon la plus succincte possible afin de bien évaluer l'intérêt des solutions exposées précédemment.

Conformément à la figure 4, on considère un giravion se déplaçant en vol de translation à une vitesse u et on convient que les positions des pales du rotor principal sont définies par leur azimut $\Psi$, généralement déterminé à partir de la position arrière, la vitesse de rotation du rotor étant désignée par $\Omega$.

Ainsi en vol de translation, la vitesse tangentielle U d'un élément de pale, situé à une distance R du centre O du rotor, se compose avec la vitesse de translation $\upsilon$. La vitesse résultante V admet alors une composante tangentielle $U_R$ qui est la vitesse relative de la pale par rapport à l'air.

A l'examen de la figure 4, les constatations suivantes s'imposent avec $U=\Omega R$ :

- une pale en position alignée vers l'avant est telle que la vitesse $U_R$ d'un élément de pale au point A (rayon R) vaut $U_R=U$,

- la vitesse relative d'un élément de pale par rapport à l'air au point B est égale à $U_R = U-\upsilon$ ; pour cette raison, la pale est dite « reculante » car sa vitesse tangentielle est inférieure à $\upsilon$ (la pale recule par rapport au mouvement de translation),

- la vitesse relative d'un élément de pale par rapport à l'air au point C (position arrière) vaut $U_R =U$,

- la vitesse relative d'un élément de pale par rapport à l'air au point D est égale à $U_R = U+\upsilon$ ; pour cette raison, la pale est dite « avançante » car sa vitesse tangentielle est supérieure à $\upsilon$ (la pale avance par rapport au mouvement de translation),

Or, la portance $F_n$ d'une pale est proportionnelle au carré de la vitesse relative $U_R$. Par conséquent, il en résulte que :

- en B où la vitesse $U_R$ est minimale, la portance est minimale,

- de B à D, la portance croît et devient maximale en D où la vitesse relative $U_R$ est également maximale,

- de D à B, la portance décroît,

- en C et A, la valeur de la portance est moyenne.

En raison des effets de précession gyroscopique, il se fait qu'une pale de rotor réagit 90 degrés après la cause tendant à modifier sa portance. Par suite, si la vitesse relative est maximale en D (la cause), la portance (l'effet) n'est pas maximale en D mais en A, 90 degrés après le point de vitesse maximale.

La pale étant articulée en battement, l'accroissement de portance tend à lever la pale par rapport à l'axe de battement vertical. En vertu de l'effet de précession gyroscopique précité, au point A de portance maximale $F_{nMAXI}$ correspond une levée maximale $\beta_{maxI}$ de la pale de sorte que D à A, la pale suit une trajectoire ascendante, conformément à la figure 5.

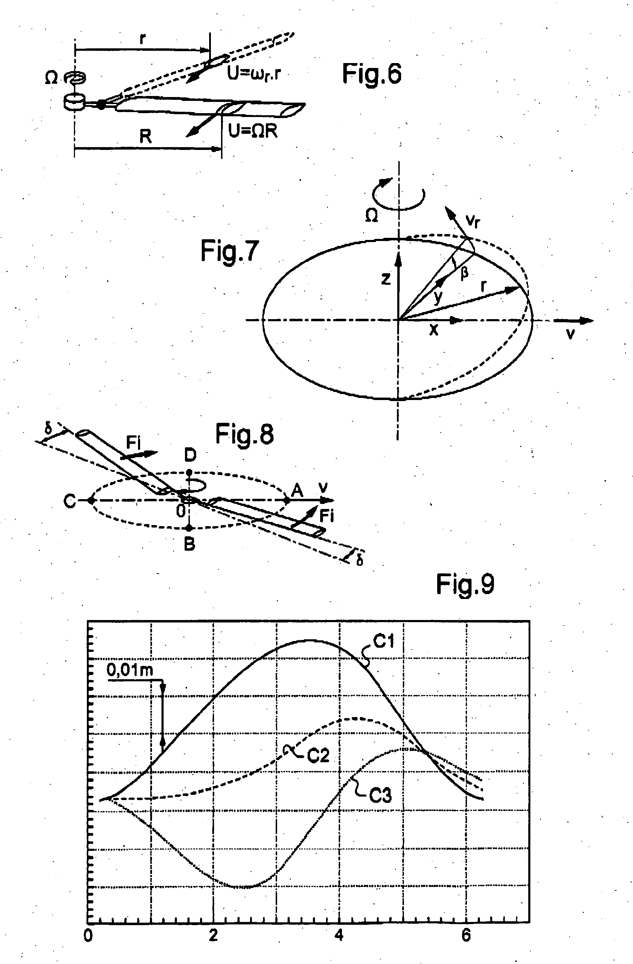

Par ailleurs, et selon la figure 6, lorsqu'une pale bat, la trajectoire circulaire d'un élément de pale quelconque est modifiée. Son rayon diminue de R à r si la pale monte ou augmente si la pale descend.

Par exemple, si la pale monte, la vitesse U d'un élément de pale égale à $\Omega R$ en D devient $\omega_r r$ dans la mesure où la pale considérée est munie d'une articulation de traînée. Or, l'élément de pale tend à conserver par inertie sa vitesse initiale U au cours du changement de trajectoire. Par suite, on en déduit que la vitesse $\omega_r$ est supérieure à $\Omega$ : la pale oscille vers l'avant. Le moment de flexion qui serait créé dans le plan de la pale est annulé en raison de l'introduction de l'articulation de traînée.

En fait, la pale est sollicitée par des forces de Coriolis qui la font osciller dans le plan orthogonal à l'axe de traînée autour d'une position moyenne.

Les forces de Coriolis résultent de la superposition du mouvement relatif dû au battement et du mouvement d'entraînement dû à la rotation propre des pales. Conformément à la figure 7, la vitesse de rotation $\Omega$ caractérise le mouvement d'entraînement d'une pale et la vitesse $\upsilon_r$ de levée de la pale correspond au mouvement relatif. La force de Coriolls appliquée à un élément de pale de masse dm est alors égale à $-2 dm \; \overrightarrow{\Omega} \wedge \overrightarrow{\upsilon_r}$ soit

$2.dm.\Omega.\upsilon_r.\sin \beta$ avec $\upsilon = r\dfrac{d\beta}{dt} \approx r\,\dot{\beta}$ et finalement

$2r.\Omega.\beta\,\dot{\beta}.dm$, c'est-à-dire dirigée vers l'axe x positif, confirmant l'affirmation précédente. Il s'agit d'une force d'inertie alternée $F_I$ due au battement vertical d'une pale. On notera que $r$ correspond à la distance séparant l'élément de pale de masse dm de l'articulation de battement, en principe déportée par rapport à l'axe rotor, à l'instar du schéma selon la figure 6. Le déport de l'axe de battement n'est pas représenté sur la figure 7 par raison de simplification du schéma.

Comme indiqué sur la figure 8, les forces d'inertie $F_I$ varient en sens et en intensité :

˚ de C à A, la pale monte : la force d'inertie $F_i$, dirigée dans le sens de rotation fait osciller la pale vers l'avant,

˚ de A à C, la pale descend : la force d'inertie $F_I$, dirigée en sens contraire du sens de rotation, fait osciller la pale vers l'arrière,

˚ en A et C, la pale occupe une position moyenne.

Dans ces conditions, les résultats des recherches effectuées par la demanderesse et exposés ci-après seront bien compris à partir des considérations précédentes.

Par conséquent, une étude théorique a été faite en vue de diminuer les charges dynamiques exercées sur des amortisseurs de traînée interpales, ces charges générant, bien évidemment par voie de conséquence, également des efforts dynamiques sur les pales et l'ensemble des autres éléments constitutifs d'un rotor de giravion.

La réduction de ces charges équivaut à diminuer les débattements importants imposés aux amortisseurs sous l'effet de l'excitation périodique du rotor. La recherche d'un abaissement des débattements imposés à un amortisseur a pour objectif une amélioration des performances des amortisseurs, notamment en terme de durée de vie, et de façon subséquente une diminution des sollicitations mécaniques des différents éléments d'un rotor de giravion.

Concrètement, une étude relative au rotor d'un hélicoptère de la classe de l'hélicoptère NH90 de la demanderesse montre un effet très avantageux d'un même décalage des points d'articulation 16 de deux amortisseurs de traînée interpales 15 à une même pale 4. Ce décalage étant noté $d$ conformément à la figure 3 (positif selon l'orientation positive de l'axe 103), il s'avère que les allongements dynamiques maximaux $al$ prennent les valeurs suivantes ($d$ et $al$ exprimés en mètre) pour trois configurations.

| Configuration | d | al |
|---|---|---|
| C1 (cas initial) | 0 | 0,021 |
| C2 | 0,06 | 0,010 |
| C3 | 0,12 | 0,018 |

Les évolutions des allongements globaux (statiques et dynamiques) pour ces trois configurations C1, C2 et C3 sont respectivement représentées sur la figure 9 où l'axe des abscisses correspond à l'azimut de la pale en radians et l'axe des ordonnées correspond aux déplacements globaux de l'amortisseur.

La configuration C2 est la plus favorable car elle permet une réduction des allongements dynamiques par un facteur de l'ordre 2.

Ce décalage selon le sens positif de l'axe 103 équivaut sensiblement à une conicité supplémentaire de l'ordre de 0,17 rd, soit près de dix degrés, les articulations 16 étant à 0,345m de la butée sphérique lamifiée 7.

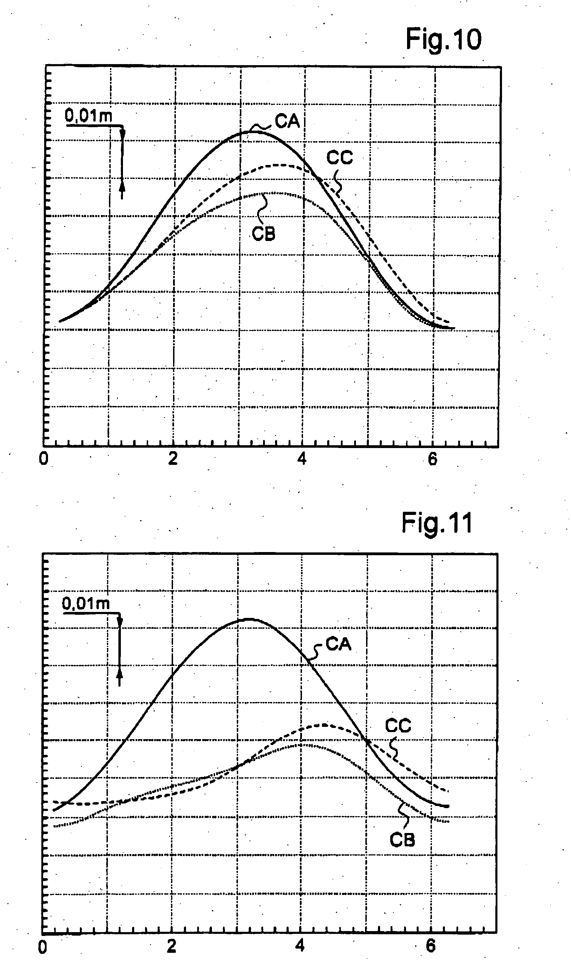

Les figures 10 et 11 montrent les contributions des différents paramètres, respectivement pour les configurations C1 et C2.

Ainsi, on repère sur ces deux figures les contributions CA, CB et CC respectivement relatives aux effets de la traînée seule, de la traînée et du battement conjugués et enfin de la traînée conjuguée au battement et au pas.

Les axes des abscisses et des ordonnées correspondent également respectivement à l'azimut d'une pale et aux déplacements globaux de l'amortisseur.

On remarque ainsi que la prise en compte du battement réduit l'effet de la traînée seule, en raison de l'action des forces de Coriolis.

Enfin, on retient qu'une augmentation excessive du décalage $\underline{d}$ devient pénalisante dans la mesure où une partie des efforts des amortisseurs peut être introduite dans la chaîne de commande de pas, ce qui par ailleurs, pourrait conduire à une instabilité de type « entraînement de manche », connu par l'homme du métier.

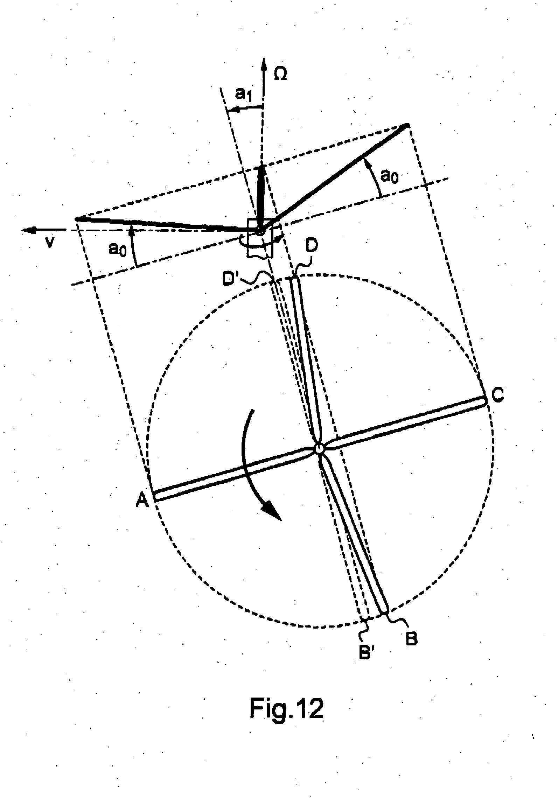

En fait et conformément à la figure 12, on rappelle qu'en vol d'avancement à la vitesse $\upsilon$, le rotor principal d'un giravion tourne avec une conicité $a_0$ dans un plan différent du plan d'entraînement. Par suite, chaque pale décrit un cône dont l'axe virtuel fait un angle $a_1$ avec l'axe d'entraînement, ou axe du moyeu ou encore arbre rotor (normal au plan d'entraînement), ce dernier correspondant au support du vecteur de rotation $\vec{\Omega}$. Dans ces conditions, le plan du rotor, décrit par l'extrémité des pales est également incliné selon l'angle $a_1$ par rapport au plan d'entraînement. Par définition, on rappelle encore que, généralement, l'angle $a_1$ est relatif à un basculement longitudinal du rotor, alors qu'un basculement latéral est repéré par un angle $b_1$.

Par ailleurs, la figure 12 montre que les extrémités des pales ne tournent pas dans leur plan d'un mouvement uniforme de sorte que dans des temps égaux correspondant à un quart de tour de l'arbre rotor, elles décrivent des arcs AB, BC, CD et DA qui sont d'autant plus inégaux que les quantités $a_0$ et $a_1$ sont plus grandes. Ce constat s'explique aussi du fait que les pales sont à une distance variable de l'arbre rotor.

Ces effets sont dus aux variations du pas cyclique combiné au pas général qui permettent le basculement du plan rotor et le vol d'avancement d'un giravion.

Bien entendu, les articulations de traînée sont destinées à permettre ces mouvements.

Plus précisément, la figure 12 montre qu'une pale en position C correspond à un angle de battement maximal par rapport à $\upsilon$ alors qu'une pale en position A est relative à un angle de battement minimal. Une pale est donc montante de A vers B et C, puis descendante.

Il apparaît encore que la longueur de l'arc AB est supérieure à celle de l'arc BC (B' : point milieu entre A et C), la vitesse de la pale sur l'arc BC est inférieure à sa vitesse sur l'arc AB.

En d'autres termes et en raison de l'effet des forces de Coriolis susmentionnées, une pale montante (battement vertical) est ralentie dans son mouvement de façon qu'elle tend à décrire des déplacements égaux dans l'espace dans des temps égaux ce qui tend à maintenir sensiblement constante l'énergie cinétique et par suite la vitesse de ladite pale par inertie. Cette vitesse tend également à devenir constante sur l'arc CDA.

Il est donc légitime de considérer que le battement vertical des pales tend à réduire les déplacements en traînée et à maintenir de la sorte les pales équidistantes, ce qui est illustré en terme de conséquence par les figures 10 et 11 (contribution CB plus favorable que la contribution CA).

Autrement dit, il est légitime de considérer que la participation du mouvement de battement vertical peut limiter les débattements d'un amortisseur de traînée interpale.

Or, nous avons établi que le décalage des articulations des amortisseurs de traînée selon le sens positif de l'axe 103 équivaut, dans le présent exemple de réalisation, à une conicité supplémentaire de l'ordre de dix degrés.

En d'autres termes, un tel décalage peut être considéré comme générateur d'une augmentation du battement vertical d'une pale et par conséquent d'une réduction des débattements de l'amortisseur interpale correspondant, conformément aux résultats selon la figure 11.

Par ailleurs, une campagne d'expérimentation en vol avec un hélicoptère SUPER PUMA MKII de la demanderesse démontre qu'une position croisée (différentielle) des articulations 16 est intéressante pour ce type d'appareil. L'application a été menée avec une configuration C4 relative à un décalage $\underline{d}$ de l'articulation 16 au bord de fuite d'une pale de 0,035m au dessus du plan P, l'articulation 16 au niveau du bord d'attaque de la même pale étant décalée de -0,005m c'est-à-dire vers le dessous du plan P. Autrement dit, les deux articulations 16 de ladite pale sont bien décalées selon l'axe 103, orthogonal au plan P, et l'articulation 16 du côté du bord de fuite de la pale est bien au dessus du plan P. La configuration initiale, sans décalage des deux articulations 16 est notée CO.

Le tableau ci-après regroupe les résultats des mesures effectuées d'une part en vol de palier, à des vitesses de 80, 100, 120 et 140 noeuds (kts) et d'autre part en virage à des facteurs de charge de 1,4 - 1,8 et 2g, g étant l'accélération de la pesanteur :

| D (mètre) | CO | C4 |
|---|---|---|
| Palier 80 kts | 0.018 | 0,011 |
| Palier 100 kts | 0,021 | 0,0125 |
| Palier 120 kts | 0,023 | 0,015 |
| Palier 140 kts | 0,027 | 0,018 |
| Virage 1,4g | 0,032 | 0,022 |
| Virage 1,8g | 0,038 | 0,029 |
| Virage 2g | 0,041 | 0,033 |

On constate qu'une réduction importante des débattements dynamiques d'un amortisseur de traînée interpale peut être obtenu par un décalage différentiel des articulations 16 tel que celui-ci dessus étudié.

En effet, on observe un gain important d'au moins 35% aussi bien en vol de palier qu'en virage, et cela sans être affecté par des variations de centrage de l'hélicoptère.

Ce gain permet d'augmenter dés lors la durée de vie d'un tel amortisseur d'un facteur 3 à 4.

Il importe encore de noter que des résultats semblables peuvent être aussi obtenus avec des articulations 16 telles que l'articulation 16 au niveau du bord de fuite est à 0,075m, au dessus du plan P (configuration C5), celle relative au bord d'attaque étant à 0,005m en dessous de ce plan.

On observe que l'angle A1 relatif aux configurations C4 et C5 vaut respectivement dix degrés et vingt deux degrés. En fait, la plage optimale pour l'angle A1 est sensiblement comprise entre sept et vingt deux degrés compte tenu des recherches spécifiques effectuées par ailleurs sur l'hélicoptère EC155 de la demanderesse. Dans ces conditions, il en résulte également les valeurs de l'angle B1 présentées précédemment.

Bien évidemment, la description précédente appliquée à un rotor quadripale vaut également pour tout rotor comportant au moins trois pales, c'est-à-dire susceptible de correspondre à une architecture avec des tirants interpales de rappel élastique.

Naturellement, la présente invention est sujette à de nombreuses variations quant à sa mise en oeuvre. Bien que plusieurs variantes aient été décrites, on comprend bien qu'il n'est pas concevable d'identifier de manière exhaustive toutes les variantes possibles. Il est bien sûr envisageable de remplacer un moyen décrit par un moyen équivalent sans sortir du cadre de la présente invention.

**Revendications**

**1.** Rotor (1) de giravion comportant un moyeu (2) entraîné en rotation selon un axe de rotation (100) orienté positivement vers le dessus du giravion, au moins trois pales (4) fixées au moyeu (2) chacune par l'intermédiaire d'articulations (7) en battement vertical, en traînée et en pas, chaque pale (4) présentant un axe de variation de pas (101), un bord d'attaque (BA) et un bord de fuite (BF), le rotor (1) comportant en outre des amortisseurs de traînée interpales (15) reliés chacun à deux pales adjacentes (4) respectivement par l'intermédiaire au moins de deux articulations sphériques (16), ou rotules, les deux articulations (16) reliant respectivement une pale (4) à deux amortisseurs de traînée interpales (15) adjacents étant disposées de part et d'autre de l'axe de variation de pas (101) de la pale (4),
**caractérisé en ce que,** l'une au moins des dites articulations (16) est décalée au dessus du plan P contenant l'axe de variation de pas (101) et l'axe de battement vertical (102), c'est-à-dire selon le sens positif de l'axe orthogonal (103) au plan P, cet axe orthogonal (103) étant orienté positivement vers le dessus du giravion.

**2.** Rotor (1) selon la revendication 1,
**caractérisé en ce que** les deux articulations (16) reliant la pale (4) à deux amortisseurs de traînée interpales (15) sont, en outre, décalées selon l'axe orthogonal (103) audit plan P.

**3.** Rotor (1) selon les revendications 1 ou 2,
**caractérisé en ce que** celle des deux articulations (16), reliant la pale (4) à deux amortisseurs de traînée interpales (15), qui est disposée du côté du bord d'attaque(BA) de la pale (4) est plus basse, par rapport à l'orientation positive de l'axe orthogonal (103) au plan P que l'articulation (16) disposée du côté du bord de fuite de la pale (4).

**4.** Rotor (1) selon l'une des revendications 1 à 3,
**caractérisé en ce que** l'angle A1 formé par le plan P et l'axe reliant les deux centres des articulations (16) de fixation d'un amortisseur de traînée interpale (15) à deux pales adjacentes (4) est situé dans une plage allant de un degré environ à sept degrés environ.

**5.** Rotor (1) selon l'une des revendications 1 à 3,
**caractérisé en ce que** l'angle B1 formé par le plan P et l'axe reliant les deux centres des articulations (16) de fixation respectives de deux amortisseurs de traînée interpales(15) et adjacents à la pale (4) est situé dans une plage allant de sept degrés environ à vingt deux degrés environ.

**6.** Rotor (1) selon l'une des revendications 1 à 5,
**caractérisé en ce que** les deux articulations (16) reliant respectivement la pale (4) considérée à deux amortisseurs de traînée interpales (15) adjacents sont disposées sur un manchon (5) intermédiaire comprenant du côté radial externe une ferrure de retenue (8) de la pale (4) et du côté radial interne une chape (6) équipée des articulations (7) de l'ensemble pale (4) et manchon (5) au moyeu.

**7.** Rotor (1) selon l'une des revendications 1 à 6,
**caractérisé en ce qu'**il comporte au moins trois pales (4).

**8.** Rotor (1) selon l'une des revendications 1 à 7,
**caractérisé en ce que** les articulations (7) de battement vertical, de traînée et de pas d'une pale (4) au moyeu (2) sont réalisées au moyen d'une seule butée sphérique lamifiée.

**9.** Rotor (1) selon l'une quelconque des revendications précédentes, **caractérisé en ce que** l'axe virtuel (104), reliant les centrée des articulations (16) de fixation respectives de deux amortisseurs de trainée interpales (15) et adjacents à la pale (4), est décalé en élévation par rapport à l'axe de variation de pas (101) de la pale.

**Claims**

**1.** Rotorcraft (1) rotor comprising a hub (2) driven in rotation about an axis of rotation (100) oriented positively upwards relative to the rotorcraft, at least three blades (4) fastened to the hub (2) each via vertical flapping, drag, and pitch hinges (7), each blade (4) having a pitch variation axis (101), a leading edge (BA), and a trailing edge (BF), the rotor (1) further comprising inter-blade drag dampers (15) each connected to two adjacent blades (4) respectively via at least two spherical joints (16), or ball joints, the two joints (16) connecting respectively one blade (4) to two adjacent inter-blade drag dampers (15) being disposed on either side of the pitch variation axis (101) of the blade (4), **characterised in that** at least one of said joints (16) is offset above the plane P containing the pitch variation axis (101) and the vertical flapping axis (102), i.e. in the positive direction of the axis (103) orthogonal to the plane P, this orthogonal axis (103) being oriented positively upwards relative to the rotorcraft.

**2.** Rotor (1) according to Claim 1, **characterised in that** the two joints (16) connecting the blade (4) to two inter-blade drag dampers (15) are, furthermore, offset along the axis (103) orthogonal to said plane P.

**3.** Rotor (1) according to Claim 1 or 2, **characterised in that** that one of the two joints (16) connecting the blade (4) to two inter-blade drag dampers (15) which is disposed on the side of the leading edge (BA) of the blade (4) is lower relative to the positive orientation of the axis (103) orthogonal to said plane P than is the joint (16) disposed on the side of the trailing edge of the blade (4).

**4.** Rotor (1) according to one of Claims 1 to 3, **characterised in that** the angle A1 formed by the plane P and the axis connecting the two centres of the joints (16) for fastening an inter-blade drag damper (15) to two adjacent blades (4) lies in a range from about one degree to about seven degrees.

**5.** Rotor (1) according to one of Claims 1 to 3, **characterised in that** the angle B1 formed by the plane P and the axis connecting the two centres of the respective joints (16) for fastening two adjacent inter-blade drag dampers (15) to the blade (4) lies in a range from about seven degrees to about twenty-two degrees.

**6.** Rotor (1) according to one of Claims 1 to 5, **characterised in that** the two joints (16) respectively connecting the blade (4) in question to two adjacent inter-blade drag dampers (15) are disposed on an intermediate sleeve (5) comprising on the radially outer side a fitting (8) for retaining the blade (4) and on the radially inner side a yoke (6) fitted with hinges (7) for hinging the assembly comprising the blade (4) and the sleeve (5) to the hub.

**7.** Rotor (1) according to one of Claims 1 to 6, **characterised in that** it comprises at least three blades (4).

**8.** Rotor (1) according to one of Claims 1 to 7, **characterised in that** the vertical flapping, drag, and pitch hinges (7) for hinging to the hub (2) are embodied by means of a single laminated spherical abutment.

**9.** Rotor (1) according to any one of the preceding claims, **characterised in that** the virtual axis (104) connecting the centres of the respective joints (16) for fastening two adjacent inter-blade drag dampers (15) to the blade (4) is offset in elevation relative to the pitch variation axis (101) of the blade.

**Patentansprüche**

**1.** Rotor (1) eines Drehflüglers, der eine Nabe (2), die gemäß einer Drehachse (100) in Drehung versetzt wird, welche positiv zur Oberseite des Drehflüglers ausgerichtet ist, und mindestens drei Rotorblätter (4) aufweist, die je an der Nabe (2) mittels eines vertikalen Schlag-, Schwenk- und Blattverstellgelenks (7) befestigt sind, wobei jedes Blatt (4) eine Blattverstellachse (101), eine Vorderkante (BA) und eine Hinterkante (BF) aufweist, wobei der Rotor (1) außerdem zwischen Blättern angeordnete Schwenkdämpfer (15) aufweist, die je mit zwei benachbarten Blättern (4) mittels mindestens zwei kugelförmigen Gelenken (16) oder Kugelgelenken verbunden sind, wobei die zwei Gelenke (16), die je ein Blatt (4) mit zwei benachbarten zwischen Blättern angeordneten Schwenkdämpfern (15) verbinden, zu beiden Seiten der Blattverstellachse (101) des Blatts (4) angeordnet sind, **dadurch gekennzeichnet, dass** mindestens eines der Gelenke (16) oberhalb der die Blattverstellachse (101) und die vertikale Schlagachse (102) enthaltenden Ebene P versetzt ist, d.h. gemäß der positiven Richtung der zur Ebene P orthogonalen Achse (103), wobei diese orthogonale Achse (103) positiv zur Oberseite des Drehflüglers ausgerichtet ist.

2. Rotor (1) nach Anspruch 1, **dadurch gekennzeichnet, dass** die zwei das Blatt (4) mit zwei zwischen Blättern angeordneten Schwenkdämpfern (15) verbindenden Gelenke (16) außerdem gemäß der zur Ebene P orthogonalen Achse (103) versetzt sind.

3. Rotor (1) nach den Ansprüchen 1 oder 2, **dadurch gekennzeichnet, dass** dasjenige der das Blatt (4) mit zwei zwischen Blättern angeordneten Schwenkdämpfern (15) verbindenden zwei Gelenke (16), das auf der Seite der Vorderkante (BA) des Blatts (4) angeordnet ist, bezüglich der positiven Ausrichtung der zur Ebene P orthogonalen Achse (103) niedriger ist als das auf der Seite der Hinterkante des Blatts (4) angeordnete Gelenk (16).

4. Rotor (1) nach einem der Ansprüche 1 bis 3, **dadurch gekennzeichnet, dass** der von der Ebene P und der die zwei Zentren der Gelenke (16) zur Befestigung eines zwischen Blättern angeordneten Schwenkdämpfers (15) an zwei benachbarten Blättern (4) verbindenden Achse gebildete Winkel A1 sich in einem Bereich befindet, der von etwa einem Grad bis etwa sieben Grad geht.

5. Rotor (1) nach einem der Ansprüche 1 bis 3, **dadurch gekennzeichnet, dass** der von der Ebene P und der die zwei Zentren der Gelenke (16) zur Befestigung von zwei zwischen Blättern angeordneten und benachbarten Schwenkdämpfern (15) am Blatt (4) verbindenden Achse gebildete Winkel B1 sich in einen Bereich befindet, der von etwa sieben Grad bis etwa zweiundzwanzig Grad geht.

6. Rotor (1) nach einem der Ansprüche 1 bis 5, **dadurch gekennzeichnet, dass** die zwei Gelenke (16), die je das betreffende Blatt (4) mit zwei benachbarten zwischen Blättern angeordneten Schwenkdämpfern (15) verbinden, auf einer Zwischenmuffe (5) angeordnet sind, die auf der radial äußeren Seite einen Haltebeschlag (8) für das Blatt (4) und auf der radial inneren Seite einen Gabelkopf (6) aufweist, der mit den Gelenken (7) der Einheit aus Blatt (4) und Muffe (5) an der Nabe ausgestattet ist.

7. Rotor (1) nach einem der Ansprüche 1 bis 6, **dadurch gekennzeichnet, dass** er mindestens drei Blätter (4) aufweist.

8. Rotor (1) nach einem der Ansprüche 1 bis 7, **dadurch gekennzeichnet, dass** die vertikalen Schlag-, Schwenk- und Blattverstellgelenke (7) eines Blatts (4) an der Nabe (2) mittels eines einzigen kugelförmigen lamellierten Anschlags hergestellt werden.

9. Rotor (1) nach einem der vorhergehenden Ansprüche, **dadurch gekennzeichnet, dass** die virtuelle Achse (104), die die Zentren der jeweiligen Gelenke (16) zur Befestigung von zwei zwischen Blättern angeordneten und dem Blatt (4) benachbarten Schwenkdämpfern (15) verbindet, in Elevationsrichtung bezüglich der Blattverstellachse (101) des Blatts versetzt ist.

Fig.1

Fig.2

Fig.3

Fig.4

$U_R = U$

$U_R = U+v$

$U_R = U$

$U_R = U-v$

Fig.5

Fn

FnMAXI

?MAXI

**Fig.6**

$U = \omega_r . r$

$\Omega$

$r$

$R$

$U = \Omega R$

**Fig.7**

$\Omega$

$v_r$

$z$

$\beta$

$y$

$r$

$x$

$v$

**Fig.8**

$\delta$

$F_i$

$D$

$v$

$C$

$A$

$0$

$F_i$

$B$

$\delta$

**Fig.9**

C1

0,01m

C2

C3

0    2    4    6

## Fig.10

## Fig.11

Fig.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2497173
- FR 2630703
- US 4915585 A
- EP 0448685 A
- EP 0085129 A